(19) Europäisches Patentamt

European Patent Office

Office européen des brevets

(11) EP 0 784 378 A2

## (12) EUROPÄISCHE PATENTANMELDUNG

(43) Veröffentlichungstag:
16.07.1997 Patentblatt 1997/29

(51) Int. Cl.$^6$: H02P 21/00

(21) Anmeldenummer: 96118644.2

(22) Anmeldetag: 20.11.1996

(84) Benannte Vertragsstaaten:
AT CH DE ES FR GB IT LI SE

(30) Priorität: 11.01.1996 EP 96100368

(71) Anmelder: SIEMENS AKTIENGESELLSCHAFT
80333 München (DE)

(72) Erfinder:
• Boeffel, Walter, Dipl.-Ing.
91058 Erlangen (DE)
• Kreienkamp, Ulrich, Dipl.-Ing.
91058 Erlangen (DE)

(54) **Verfahren zur Bestimmung der absoluten Rotorlage bei feldorientiert geregelten Synchronmaschinen sowie Vorrichtung zur Durchführung des Verfahrens**

(57) Die absolute Rotorlage wird über einen Schätzwert des tatsächlichen Rotorlagewinkels ermittelt, indem die momentbildende Komponente zu Null und die flußbildende Komponente (Id) zu einem Wert größer als Null gewählt wird, so daß im Falle einer Abweichung des Schätzwertes des Rotorlagewinkels vom tatsächlichen Rotorlagewinkel ein Drehmoment erzeugt wird, welches eine Bewegung des Rotors in Richtung auf die geschätzte Rotorlage hervorruft. Es wird ein durch die Bewegung des Rotors bedingter Drehzahlistwert ($N_{ist}$) bestimmt und ein dazu proportionaler Korrekturwinkel vorgegeben, welcher den geschätzten Rotorlagewinkel auf den tatsächlichen Rotorlagewinkel korrigiert.

FIG 2

**Beschreibung**

Die Erfindung betrifft ein Verfahren und eine Vorrichtung zur Bestimmung der absoluten Rotorlage bei feldorientiert geregelten Synchronmaschinen.

Beim Betrieb von Synchronmaschinen, insbesondere bei solchen mit inkrementell arbeitenden Drehgebern an Frequenzumrichtern, welche über eine feldorientierte Regelung angesteuert werden, muß beim Hochfahren der Maschine die absolute Rotorlage bestimmt werden, denn bei elektronisch kommutierenden, permanent erregten Synchronmaschinen muß die Lage des Rotors zu jedem Zeitpunkt bekannt sein. Sie wird für die elektronische Kommutierung gebraucht, um stets die maximale Momentenausbeute bei gleichzeitig minimalen Verlusten zu erhalten.

Bei einer permanenterregten Synchronmaschine wird der Strom über die Wicklungen im Ständer bzw. Stator vorgegeben, das Feld wird über Permanentmagnete, welche auf dem Läufer bzw. Rotor befestigt sind, vorgegeben. Das Magnetfeld hat dabei bezogen auf den Umfang eine Hauptwirkungsrichtung, welche abhängig von der Feldlage und der Rotorlage ist und die sich mit dem Rotor mitdreht.

Um ein Drehmoment zu erzeugen, muß ein Strom mit einer Richtung senkrecht zur magnetischen Induktion in die Ständerwicklung eingeprägt werden. Da die magnetische Induktion durch die Permanentmagnete fest eingeprägt ist, benötigt man für eine feldorientierte Regelung zu jedem Zeitpunkt die Kenntnis der aktuellen Rotorlage bezogen auf den umgebenden Ständer. Aus diesem Grunde muß nach dem Einschalten der Regelung vor einer Ausführung der ersten zielgerichteten Verfahrbewegung die absolute Rotorlage bestimmt werden. Anschließende Veränderungen der Rotorlage werden dann beispielsweise mit Hilfe eines inkrementellen Drehgebers nachgeführt.

Üblicherweise wird die Rotorlage entweder über zusätzlich angebrachte Hall-Sensoren, die das Magnetfeld der Permanentmagnete messen, oder über mechanische Vorrichtungen am Motor selber aufgenommen, die über Schalter die Lage an eine Auswerteelektronik weitermelden. Beide Verfahren bedeuten zusätzlichen Aufwand, der sich in zusätzlichen Kosten niederschlägt. Darüberhinaus sind diese Verfahren nur begrenzt genau. Die mechanischen Kommutierungsschalter sind auch nur für Motoren geeignet, die für blockförmige Ströme ausgelegt sind.

Sollen Motoren eingesetzt werden, die für sinusförmige Ströme ausgelegt sind, und soll die Genauigkeit erhöht werden, so ist der Einsatz eines Absolutgebers bzw. Gebers mit einer Absolutspur, der um mindestens eine Umdrehung absolut zählt, unumgänglich.

Eine diesbezüglich verwendete Vorgehensweise zur Bestimmung der absoluten Rotorlage bei Synchronmaschinen besteht im Einsatz eines optischen Gebers, der neben zwei inkrementellen Rohsignalspuren und einer Nullmarke zusätzlich über zwei Absolutspuren verfügt, z.B. solchen Absolutspuren, die auf einer Sinus-/Cosinusperiode pro mechanischer Umdrehung basieren.

Nach dem Einschalten der Regelung wird dabei zunächst über die beiden Absolutspuren die absolute Rotorlage in Form einer Groblage ermittelt, die genau genug ist, um ein Anfahren des Motors zu ermöglichen. Man spricht in diesem Zusammenhang auch von einer Grobsynchronisation. Spätestens nach einer vollen Motorumdrehung wird dann durch Überfahren der Nullmarke die genauere Feinlage ermittelt (Feinsynchronisation). Weitere Lagewerte werden dann über die inkrementellen Rohsignalspuren ermittelt.

Ein solches Verfahren erfordert jedoch beim Anbau des Gebers an den Motor eine exakte Justage der Gebernullmarke auf die tatsächliche Wirkungsrichtung des Magnetfeldes, was mit einem hohen Aufwand und hohen Kosten verbunden ist.

Aufgabe der vorliegenden Erfindung ist es daher, ein Verfahren sowie eine dazugehörige Vorrichtung zu schaffen, die es ermöglichen, ohne eine Auswertung von Absolutspuren eines Drehgebers die Rotorlage von Synchronmaschinen, welche feldorientiert geregelt werden, zu bestimmen. Vielmehr soll ein Einsatz einfacher kostengünstiger Geber auch für Synchronmaschinen möglich werden.

Diese Aufgabe wird durch ein Verfahren mit den folgenden Verfahrensschritten gelöst:

1.1 es wird ein Schätzwert des tatsächlichen Rotorlagewinkels vorgegeben,

1.2 es wird eine aus momentbildender und flußbildender Komponente bestehende Größe in Richtung des geschätzten Rotorlagewinkels eingeprägt, indem die momentbildende Komponente zu Null und die flußbildende Komponente zu einem Wert größer als Null gewählt wird, so daß im Falle einer Abweichung des Schätzwertes des Rotorlagewinkels vom tatsächlichen Rotorlagewinkel ein Drehmoment erzeugt wird, welches eine Bewegung des Rotors in Richtung auf die geschätzte Rotorlage hervorruft,

1.3 es wird ein durch die Bewegung des Rotors bedingter Drehzahlistwert bestimmt und ausgewertet,

1.4 in Abhängigkeit vom Drehzahlistwert wird ein Regelungswert bestimmt, der einen Korrekturwinkel vorgibt, welcher den geschätzten Rotorlagewinkel auf den tatsächlichen Rotorlagewinkel korrigiert.

Diese Verfahrensschritte ermöglichen die Lösung der Aufgabe bei sogenannten nicht hängenden Achsen. Nicht hängende Achsen sind elektrische Antriebe inklusive einer Vorrichtung zur Umwandlung der rotatorischen Bewegung in eine Linearbewegung (z.B. Kugelrollspindel) und andere mechanische Aufbauten (z.B. weitere Achsen), die beim Ausschalten der Regelung der elektrischen Vorschubmotoren keine oder nur eine sehr kleine Bewegung tun. Dies ist der Fall, wenn entweder kein Lastmoment in Bewegungsrichtung angreift, oder wenn ein angreifendes Lastmoment durch eine mechanische Ausgleichsvorrichtung kompensiert wird.

Im Gegensatz dazu unterscheidet man hängende Achsen, bei denen stationär ein konstantes, in der Regel nicht bekanntes Lastmoment auf die Antriebsachse einwirkt. Solche Hängenden Achsen werden sich im stromlosen Zustand der Motoren ohne Einwirkung einer Bremse bewegen. Dies verändert die Vorraussetzungen zur Lösung der Aufgabe. In einer alternativen Ausgestaltung des Verfahrens gemäß der vorliegenden Erfindung wird daher eine Lösung der Aufgabe auch für Antriebe mit hängenden Achsen geschaffen. Dies wird durch folgende Verfahrensschritte ermöglicht:

2.1 es wird ein Schätzwert des tatsächlichen Rotorlagewinkels vorgegeben,

2.2 es werden mindestens zwei aus momentbildender und flußbildender Komponente bestehende Größen in Richtung des geschätzten Rotorlagewinkels mit unterschiedlichen Beträgen eingeprägt, wobei die momentbildende Komponente jeweils zu Null und die flußbildende Komponente jeweils zu einem unterschiedlichen Wert größer als Null gewählt wird, so daß im Falle einer Abweichung des Schätzwertes des Rotorlagewinkels vom tatsächlichen Rotorlagewinkel jeweils ein Drehmoment erzeugt wird, welches eine Bewegung des Rotors in Richtung auf die geschätzte Rotorlage hervorruft,

2.3 es wird ein durch die jeweilige Bewegung des Rotors bedingter Drehzahlistwert bestimmt und ausgewertet,

2.4 in Abhängigkeit der Drehzahlistwerte wird ein Regelungswert bestimmt, der einen Korrekturwinkel vorgibt, welcher den geschätzten Rotorlagewinkel auf den tatsächlichen Rotorlagewinkel korrigiert.

In einer ersten vorteilhaften Ausgestaltung der Verfahren gemäß der vorliegenden Erfindung wird eine besonders einfach zu realisierende und besonders geeignete Art der Regelung zur Ermittelung eines geeigneten Korrekturwinkeis durchgeführt, die eine Realisierung des Verfahrens gemäß der vorliegenden Erfindung stark vereinfacht. Dies wird durch folgenden weiteren Verfahrensschritt ermöglicht.

3.1 der Korrekturwinkel wird durch eine Lageregelung oder eine kaskadierte Lage- und Drehzahlregelung mit integralem Anteil und bedarfsweise einem zusätzlichen proportionalen Anteil bestimmt.

Zur weiteren Vereinfachung des Verfahrens gemäß der vorliegenden Erfindung wird in einer weiteren vorteilhaften Ausgestaltung erreicht, daß der Aufwand zur Bestimmung des Schätzwertes des tatsächlichen Rotorlagewinkels minimiert werden kann. Dies wird durch folgenden weiteren Verfahrensschritt erreicht:

4.1 der Schätzwert des tatsächlichen Rotorlagewinkels wird zu Null gesetzt.

In einer weiteren vorteilhaften Ausgestaltung des Verfahrens gemäß der vorliegenden Erfindung wird erreicht, daß der Drehzahlistwert auf besonders einfache und preisgünstige Art und Weise ermittelt werden kann und somit ein Einsatz einfacher kostengünstiger Geber für Synchronmaschinen ermöglicht wird. Dies wird durch folgenden weiteren Verfahrensschritt erreicht:

5.1 der Drehzahlistwert wird mittels einer inkrementellen Drehzahlerfassung bestimmt.

In einer weiteren vorteilhaften Ausgestaltung des Verfahrens gemäß der vorliegenden Erfindung wird eine feldorientierte Regelung nach dem erfindungsgemäßen Verfahren über ein Einprägen von dazu geeigneten Strömen ermöglicht. Dies wird durch folgenden weiteren Verfahrensschritt erreicht:

6.1 als momentbildende Komponente wird ein Querstrom in Wirkungsrichtung senkrecht zum geschätzten Rotorlagewinkel und als flußbildende Komponente ein Längsstrom in Richtung des geschätzten Rotorlagewinkels verwendet.

In einer weiteren vorteilhaften Ausgestaltung des Verfahrens gemäß der vorliegenden Erfindung wird der einzuprägende Strom so optimiert, daß er an die Begebenheit der zugrundeliegenden Synchronmaschine optimal angepaßt ist und einen sicheren Betrieb des Verfahrens ermöglicht. Außerdem wird erreicht, daß bei dem Verfahren keine nennenswerte Umdrehung des Rotors hervorgerufen wird. Dies wird durch folgenden weiteren Verfahrensschritt erreicht:

7.1 der Längsstrom als flußbildende Komponente wird so groß gewählt, daß die Haftreibung des Rotors überwunden wird, in diesem Bereich jedoch so, daß eine möglichst geringe Drehung des Rotors erfolgt.

In einer weiteren vorteilhaften Ausgestaltung des Verfahrens gemäß der vorliegenden Erfindung wird der einzuprägende Strom auf eine andere Art und Weise optimiert, so daß er an die Begebenheit der zugrundeliegenden Synchronmaschine optimal angepaßt ist und bei dem Verfahren eine möglichst geringe Umdrehung des Rotors hervorgerufen wird. Dies wird durch folgenden weiteren Verfahrensschritt erreicht:

8.1 die Regelung wird mit einem kleinen Drehmoment, insbesondere hervorgerufen durch einen kleinen Strom, gestartet, welches nach dem Einschwingvorgang sukzessive erhöht wird.

In einer weiteren vorteilhaften Ausgestaltung des Verfahrens gemäß der vorliegenden Erfindung wird eine durch die geringe Umdrehung des Rotors hervorgerufene Drehzahl abgebaut. Dies wird durch folgenden weiteren Verfahrensschritt erreicht:

9.1 die bei der Ermittlung des Drehzahlistwertes entstandene Drehzahl wird wieder abgebaut, indem für die gleiche Zeit ein entsprechendes negatives Moment erzeugt wird, wozu die in Richtung des geschätzten Rotorlagewinkels eingeprägte Größe mit der momentbildenden Komponente zu Null und einem im Vergleich zu vorher negativen Wert für die flußbildende Komponente gewählt wird, bevor der geschätzte Rotorlagewinkel auf den tatsächlichen Rotorlagewinkel korrigiert wird.

In einer weiteren vorteilhaften Ausgestaltung des Verfahrens gemäß der vorliegenden Erfindung wird erreicht, daß auch in dem ungünstigen Fall, daß sich tatsächlicher und geschätzter Rotorlagewinkel um ca. 180 Grad unterscheiden, die Rotorlage sicher ermittelt werden kann. dies wird durch folgenden weiteren Verfahrensschritt erreicht:

10.1 der geschätzte Rotorlagewinkel wird um einen vorgebbaren Winkelwert verschoben, wenn sich nach einer vorgebbaren Zeit keine Drehung des Rotors eingestellt hat.

Um ein solches vorteilhaftes Verfahren zur Bestimmung der absoluten Rotorlage bei feldorientiert geregelten Synchronmaschinen gemäß der Erfindung auf einfache Art und Weise zu realisieren, wird diese Aufgabe mittels einer Regelungsstruktur mit folgenden Elementen gelöst:

11.1 es ist ein PI-Regler vorgesehen, dem ein zu Null gesetzter Drehzahlwert als Führungsgröße dient,
11.2 es ist ein Mittel zur Erzeugung eines Drehmomentes vorgesehen, dem der Ausgangswert des PI-Reglers als Eingangssignal dient,
11.3 es ist eine Übertragungskennlinie vorgesehen, die das Trägheitsmoment des Rotors berücksichtigt,
11.4 ein durch diese Elemente herbeigeführter Drehzahlistwert des Rotors ist als Regelgröße auf den Eingang des PI-Reglers zurückgeführt.

Eine Konkretisierung der Regelungsstruktur gemäß der vorliegenden Erfindung ermöglicht eine vorteilhafte Realisierung für solche Synchronmaschinen mit nicht hängenden Achsen. Eine solche Regelungsstruktur weist folgende Elemente auf:

12.1 es ist ein Lageregler oder ein kaskadierter Lage- und Drehzahlregler vorgesehen,
12.2 es ist ein Umrichter zur Erzeugung eines Drehmomentes vorgesehen, welcher das Einprägen eines Statorfeldzeigers von beliebiger Größe und Winkel in den Stator der Synchronmaschine ermöglicht,
12.3 es ist ein inkrementeller Drehgeber an der Synchronmaschine vorgesehen,
12.4 ein aus einem durch diese Elemente herbeigeführten Drehzahlistwert abgeleiteter Lagewinkelistwert des Rotors ist als Regelgröße auf den Eingang des Lagereglers zurückgeführt; bei Vorhandensein des kaskadierten Drehzahlreglers ist zusätzlich der Drehzahlistwert als weitere Regelgröße auf dessen Eingang zurückgeführt,
12.5 es sind Mittel zur Übernahme des Anfangslagewinkels in den Sollwert des Lagereglers vorgesehen.

Eine alternative Konkretisierung der Regelungsstruktur gemäß der vorliegenden Erfindung ermöglicht eine vorteilhafte Realisierung für solche Synchronmaschinen mit hängenden Achsen, auf die stationär ein konstantes, nicht bekanntes Lastmoment einwirkt. Eine solche Regelungsstruktur weist folgende Merkmale auf:

13.1 es ist ein Lageregler oder ein kaskadierter Lage- und Drehzahlregler vorgesehen,
13.2 es ist ein Umrichter zur Erzeugung eines Drehmomentes vorgesehen, welcher das Einprägen eines Statorfeldzeigers von beliebiger Größe und Winkel in den Stator der Synchronmaschine ermöglicht,
13.3 es ist ein inkrementeller Drehgeber an der Synchronmaschine vorgesehen,
13.4 ein aus einem durch diese Elemente herbeigeführten Drehzahlistwert abgeleiteter Lagewinkelistwert des Rotors ist als Regelgröße auf den Eingang des Lagereglers zurückgeführt; bei Vorhandensein des kaskadierten Drehzahlreglers ist zusätzlich der Drehzahlistwert als weitere Regelgröße auf dessen Eingang zurückgeführt,
13.5 es sind Mittel zur Übernahme des Anfangslagewinkels in den Sollwert des Lagereglers vorgesehen,
13.6 es sind Mittel zur Bestimmung eines Korrekturwinkels anhand mindestens zweier eingeprägter Statorfeldzeiger unterschiedlicher Größe vorgesehen.

Die mit der Erfindung erzielten Vorteile bestehen insbesondere darin, daß zur Bestimmung der absoluten Rotorlage von Synchronmaschinen eine Grobsynchronisation nicht mehr über teuere Drehzahlgeber mit Absolutspuren erfolgen muß, sondern dafür durch Einsatz des vorteilhaften Verfahrens auch einfachere kostengünstige Geber für Synchronmaschinen einsetzbar werden. Abhängig von der Höhe des eingeprägten Stromes und des so erzeugten Drehmomentes, der Genauigkeit der Kenntnis des Trägheitsmomentes sowie einer möglichst geringen Drehung des Rotors kann auch auf die Auswertung der Nullmarke bzw. die Feinsynchronisation verzichtet werden. Auf diese Art und Weise läßt sich erreichen, daß eine kostenintensive Justage beim Anbau des Gebers an die Synchronmaschine entfallen kann. Dies wird auch bei einer Anwendung mit sogenannten hängenden Achsen erreicht.

Weitere Vorteile und Einzelheiten der vorliegenden Erfindung ergeben sich aus der folgenden Beschreibung eines Ausführungsbeispiels in Verbindung mit den Figuren sowie aus den Unteransprüchen. Dabei sind gleiche Elemente gattungsbildend mit gleichen Bezugszeichen gekennzeichnet, sofern sie die gleiche Funktion besitzen. Gleiche Elemente müssen demnach nicht zwangsläufig dieselben sein. Es zeigen:

FIG 1  Draufsicht auf eine Rotorachse mit Rotorlagewinkel und Stromvorgabe,
FIG 2  Blockschaltbild einer Regelungsstruktur zur Bestimmung der absoluten Rotorlage bei Synchronmaschinen,
FIG 3  Blockschaltbild einer ersten Reglerstruktur mit Lageregler zur Verschiebung des Statorfeldzeigers,
FIG 4  Blockschaltbild einer alternativen Reglerstruktur mit kaskadiertem Lage- und Drehzahlregler zur Verschiebung des Statorfeldzeigers,
FIG 5  Blockschaltbild einer weiteren alternativen Reglerstruktur mit Lageregler zur Verschiebung des Statorfeldzeigers,
FIG 6  Blockschaltbild einer weiteren alternativen Reglerstruktur mit kaskadiertem Lage- und Drehzahlregler zur Verschiebung des Statorfeldzeigers und
FIG 7  Blockschaltbild einer möglichen Realisierung des Umrichterblocks aus den FIG 3 bis 6.

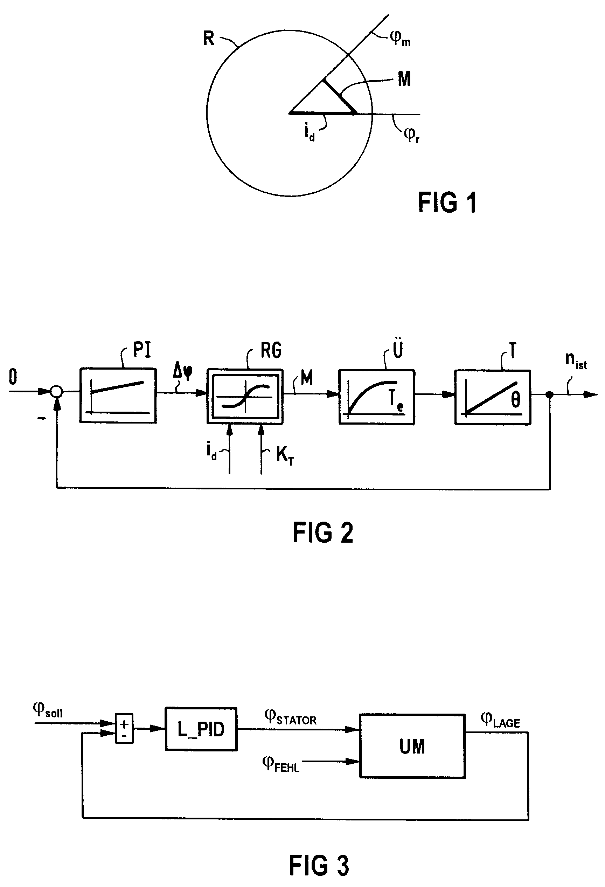

In der Darstellung gemäß FIG 1 ist eine Draufsicht auf eine Rotorachse gezeigt, in die der tatsächliche Rotorlagewinkel $\varphi_m$ und ein Schätzwert des Rotorlagewinkels $\varphi_r$ eingetragen sind. Desweiteren ist das resultierende Drehmoment M gezeigt, welches durch einen eingeprägten Längsstrom $i_d$, welcher ebenfalls gezeigt ist, erzeugt wird.

Nach dem Einschalten einer Regelung, beispielsweise realisiert über einen Frequenzumrichter, weist der Synchronmotor einen zu diesem Zeitpunkt noch unbekannten Rotorlagewinkel $\varphi_m$ auf. Der Regelung wird hingegen der Schätzwert des Rotorlagewinkels $\varphi_r$ vorgegeben, dessen Startwert in einfacher Weise zu Null gesetzt wird. Im Zuge einer feldorientierten Regelung wird prinzipiell eine flußbildende Größe und eine momentbildende Größe in den Motor eingeprägt. Im konkreten Anwendungsfall kann dazu ein Längsstrom $i_d$ in Richtung des geschätzten Rotorlagewinkels $\varphi_r$ und ein Querstrom $i_q$ in Wirkungsrichtung senkrecht zur Richtung des geschätzten Rotorlagewinkels $\varphi_r$ eingeprägt werden.

Zur Bestimmung der absoluten Rotorlage wird nun der Querstrom $i_q$ zu Null und der Längsstrom $i_d$, also die flußbildende Komponente, mit einem positiven Stromwert größer Null vorgegeben. Diese wird bevorzugt als Zeiger in die Wicklungen des Stators bzw. Ständers der Synchronmaschine eingeprägt. Solange der tatsächlich vorliegende Rotorlagewinkel $\varphi_m$ und der geschätzte Rotorlagewinkel $\varphi_r$ nicht übereinstimmen, bewirkt der Längsstrom $i_d$ aufgrund des Statorfeldes ein Drehmoment M am Rotor R, für das folgende Berechnungsschrift gilt:

$$M = K_T \,^* \, I_d \,^* \sin(\varphi_r - \varphi_m). \tag{1}$$

Dieses resultierende Drehmoment M ergibt sich somit als das Produkt aus dem eingeprägten Längsstrom $i_d$ sowie dem durch die Lage des Rotors R definierten Magnetfeld, welches durch den Permanentmagnet des Rotors hervorgerufen wird. $K_T$ beschreibt dabei eine Drehmomentkonstante, welche sich nach der zugrundeliegenden Synchronmaschine richtet.

Dieses Drehmoment M ruft nun eine Bewegung des Rotors R und damit des tatsächlichen Rotorlagewinkels $\varphi_m$ in Richtung auf die geschätzte Rotorlage $\varphi_r$ hervor. Diese Tatsache ist in der Darstellung gemäß FIG 1 durch den mit M gekennzeichneten Pfeil, welcher senkrecht zum tatsächlichen Rotorlagewinkel $\varphi_m$ wirkt, gezeigt. Der diese Bewegung des Rotors R hervorrufende Längsstrom $i_d$ wird so groß gewählt, daß die Haftreibung des Rotors R überwunden wird.

Die resultierende Bewegung des Rotors R wird über einen inkrementellen Drehgeber anhand des von diesem gemeldeten Drehzahlistwertes $n_{ist}$ erkannt.

Damit eine durch diese Bewegung vorgerufene Drehung des Rotors R, welche unerwünscht ist, so gering wie möglich gehalten werden kann, wird der geschätzte Rotorlagewinkel $\varphi_r$ über einen integralen Regler, bevorzugterweise über einen PI-Regler, korrigiert, dessen Eingangsgröße die vom Drehgeber erfaßte Istdrehzahl $n_{ist}$ darstellt und dessen Ausgangsgröße den Korrekturwert des Rotorlagewinkels $\Delta\varphi$ liefert. Dieser Korrekturwinkel $\Delta\varphi$ gleicht somit die Differenz zwischen tatsächlichem Rotorlagewinkel $\varphi_m$ und dem geschätzten Rotorlagewinkel $\varphi_r$, welcher einfacherweise zu

Null gesetzt wird, aus.

Nach einem Einschwingvorgang ist im Rahmen der Genauigkeit des Verfahrens $\varphi_r$ gleich $\varphi_m$ und damit die absolute Rotorlage identifiziert.

Der Längsstrom $i_d$ wird dabei nach einer Strategie vorgegeben, die es ermöglicht, daß zum einen die Haftreibung des Rotors R sicher überwunden wird, jedoch der Grad der Drehung des Rotors R möglichst gering bleibt. Dabei wird berücksichtigt, daß eine Abhängigkeit zwischen der Höhe des vorgegebenen Längsstroms $i_d$ und der Genauigkeit des Ergebnisses der Rotorlage sowie dem Grad der Drehung des Rotors R besteht. Eine Erhöhung des Stromes $i_d$ bewirkt eine erhöhte Genauigkeit durch eine bessere Überwindung der Haftreibung, jedoch verursacht dieser auch eine größere Drehung des Rotors. Es hat sich dabei als vorteilhaft erwiesen, den Längsstrom $i_d$ in Höhe des Motornennstromes vorzugeben.

In der Darstellung gemäß FIG 2 ist ein Blockschaltbild einer Regelungsstruktur gezeigt, welche zur Durchführung des Verfahrens zur Bestimmung der absoluten Rotorlage bei feldorientiert geregelten Synchronmaschine geeignet ist. Dieses ist der besseren Verständlichkeit halber im Sinne eines Ersatzschaltbildes dargestellt. Es handelt sich dabei um einen geschlossenen Regelkreis, bei dem ein Drehzahlwert, im vorliegenden Ausführungsbeispiel der zu Null gesetzte Drehzahlwert, als Sollwert vorgegeben wird. Dieser wird eingangsseitig auf einen PI-Regler PI geschaltet, dessen Ausgangssignal den Korrekturwinkel $\Delta\varphi$ darstellt. Dieser wird einem Rechenglied RG zugeführt, in dem ein dazugehöriges Drehmoment M ermittelt wird. Dies geschieht nach der im vorangehenden dargestellten Berechnungsschrift durch Einprägen eines geeigneten Längsstromes $i_d$ in Richtung des geschätzten Rotorlagewinkels $\varphi_r$. Dabei wird auch eine Drehmomentkonstante $K_T$ berücksichtigt. In der Praxis ist hierfür jedoch kein explizites Rechenglied erforderlich, denn das Drehmoment entsteht entsprechend der im vorangehenden dargestellten Beziehung in Abhängigkeit des eingeprägten Längsstromes $i_d$ im elektrischen Antrieb. Somit dient die Höhe des Längsstromes $i_d$ zur Beeinflussung des Drehmomentes M.

Daneben besteht beispielsweise auch die Möglichkeit, das Drehmoment M über eine geeignete funktionelle Beziehung, welche anstelle des Rechengliedes RG in Form einer Tabelle abgelegt ist, zu ermitteln. Die in die Bestimmung des Drehmomentes M eingehenden Größen, nämlich der Längsstrom $i_d$ und die Drehmomentkonstante $K_T$ sind in der Darstellung gemäß FIG 2 berücksichtigt, indem sie als Eingangssignale an das Rechenglied RG geführt sind. Das so erzeugte Drehmoment M gelangt zu einer Übertragungskennlinie Ü, in der die in einer Ersatzzeitkonstanten $T_e$ zusammengefaßten Totzeiten des geschlossenen Regelkreises zusammengefaßt sind. Das Ausgangssignal der Übertragungskennlinie Ü schließlich wird einer weiteren Übertragungskenninie T zugeleitet, in welcher das Trägheitsmoment $\Theta$ berücksichtigt wird. Die Übertragungskennlinie T liefert als Ausgangssignal den Drehzahlistwert $n_{ist}$, welcher negativ auf den Eingang des PI-Reglers PI rückgekoppelt ist. Sowohl die Übertragungskennlinie Ü als auch die Übertragungskennlinie T sind in FIG 2 im Sinne eines Ersatzschaltbildes als separate Blöcke zur Veranschaulichung der Funktionalität gezeigt. Es sei an dieser Stelle jedoch darauf hingewiesen, daß im Falle einer praktischen Umsetzung diese Größen implizit im eingesetzten Antrieb enthalten sind und durch diesen erst verursacht werden. Somit wird für eine einfache Realisierung der Regelungsstruktur als externe Einheit lediglich der PI-Regler PI benötigt. Der Längsstrom $i_d$ wird in diesem einfachsten Fall als fester Wert vorgegeben.

In die Dimensionierung dieses Reglers gehen jedoch der vorgegebene Längsstrom $i_d$, das Trägheitsmoment $\Theta$, die Drehmomentkonstante $K_T$ und die in der Ersatzzeitkonstante $T_e$ zusammengefaßten Totzeiten des Regelkreises ein.

Vorstellbar, wenn auch technisch weniger sinnvoll, ist auch eine Vorgehensweise, bei der der Längsstrom $i_d$ zu Null gesetzt und der momentbildende Strom $I_q$ größer Null vorgegeben wird, auf den dann ein fester Faktor von 90 Grad aufaddiert wird.

Für den Fall, daß geschätzter Rotorlagewinkel und tatsächlicher Rotorlagewinkel um 180 Grad versetzt sind, besteht die Möglichkeit, daß aufgrund eines geringen Längsstromes $i_d$ und großer Haftreibung keine Drehung des Rotors R hervorgerufen wird. In einem solchen Fall wird der geschätzte Rotorlagewinkel um 90 Grad verschoben, wenn sich nach einer vorgebbaren Zeit keine Drehung eingestellt hat.

Der Grad der Drehung des Rotors R ist davon abhängig, wie genau das Trägheitsmoment $\Theta$ bekannt ist. Somit läßt sich durch eine exaktere Vorgabe des Trägheitsmomentes $\Theta$ der zur Überwindung der Haftreibung benötigte Längsstrom $i_d$ weiter minimieren und so der Grad der Drehung des Rotors R ebenfalls gering halten. Bei ausreichender Genauigkeit kann so auch die Auswertung der Nullmarke im Rahmen der Feinsynchronisation ersetzt werden, was den weiteren Vorteil mit sich bringt, daß die Justage im Anbau eines entsprechenden Drehgebers an den Motor ebenfalls entfallen kann. Damit werden somit auch die Kosten bei der Inbetriebnahme erheblich reduziert.

Das Verfahren gemäß der vorliegenden Erfindung läßt sich für spezielle Anwendungen weiter konkretisieren. Um große Rotorbewegungen zu vermeiden, wird der Winkel des Statorfeldzeigers - also der geschätzte Rotorlagewinkel - so bewegt, daß er dem Rotorfeldzeiger entgegenkommt und damit die Auslenkung des Rotors minimiert. Wenn der Rotor eingeschwungen ist, dann hat der Statorfeldzeiger den gleichen Winkel wie der Rotorfeldzeiger, wodurch der gesuchte Rotorfeldzeigerwinkel bekannt ist.

Die Verschiebung des Statorfeldzeigers kann beispielsweise durch eine der in den FIG 3 bis 6 gezeigten Regelungsstrukturen erreicht werden. Dies leistet entweder ein Lageregler L_PID, dessen Ausgang der Statorfeldzeigerwinkel ist, oder alternativ ein kaskadierter Lage- L_P und Drehzahlregler D_PID, dessen Ausgang ebenfalls der Winkel des Statorfeldes ist. Ein anfänglicher Fehlwinkel $\varphi_{FEHL}$ bzw. $\Delta\varphi$ wirkt damit als Störgröße, die ausgeregelt werden muß.

Zugrunde liegt dem Verfahren ein wie auch immer geartetes Umrichtersystem UM, das in der Lage ist, einen Statorfeldzeiger beliebiger Größe und Winkel in den Stator einzuprägen.

Für die weiteren Erläuterungen sollen für eine bessere Verständlichkeit folgende Bezeichnungen verwendet werden, die auch als Bezugszeichen in den FIG 3 bis 7 zum Einsatz gelangen:

$\varphi_{LAGE}$:
Die Blockschaltbilder der vier Reglerstrukturen gemäß FIG 3 bis FIG 6 haben alle $\varphi_{LAGE}$ als Ausgang des Umrichterblocks. $\varphi_{LAGE}$ ist der Rotorfeldzeigerwinkel, der mit Hilfe des Inkrementalgebers vom Einschaltzeitpunkt an gemessen wird. $\varphi_{LAGE}$ ist also eine im Rechner mitgeführte Rotorlage $\varphi_{ROTOR}$, die gegenüber der tatsächlichen Rotorlage $\varphi_m$ um die konstante, aber gesuchte Größe $\varphi_{FEHL}$ falsch ist. $\varphi_{LAGE}$ startet bei Null.

Lagewinkelsollwert $\varphi_{soll}$:
Damit der Lageregler L_P bzw. L_PID nach dem Einschalten des Reglers keine Lageänderung verursacht, wird der Anfangslagewinkel $\varphi_{LAGE}$ in den Sollwert übernommen. Da $\varphi_{LAGE}$ am Anfang 0 ist, wird in den Lagesollwert auch 0 übernommen.

$\varphi_{FEHL}$:
Dies ist der gesuchte Fehlwinkel zwischen $\varphi_{LAGE}$ im Regler und dem tatsächlichen Rotorfeldwinkel $\varphi_{ROTOR}$ im Motor, der als Störgröße für den Regler wirkt. $\varphi_{FEHL}$ entspricht einem das Drehmoment bewirkenden Winkel $\varphi_{MOMENT}$ bzw. $-\Delta\varphi$ aus FIG 1 vom ersten Einschalten.

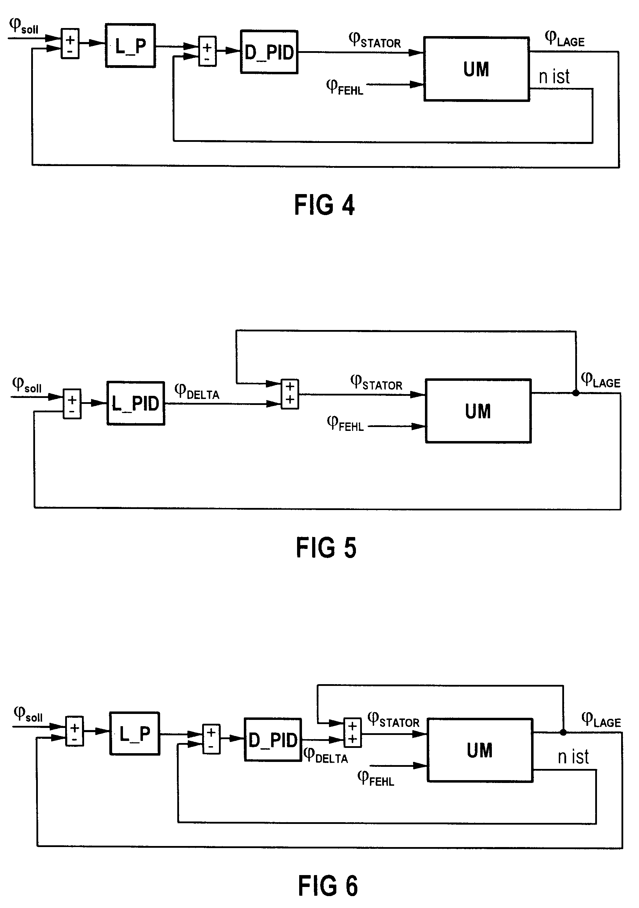

$\varphi_{STATOR}$:
Der Statorfeldzeigerwinkel ist in den FIG 3 und 4 der Ausgang des Reglers. Zu Beginn stellt $\varphi_{STATOR}$ den Schätzwert $\varphi_r$ des tatsächlichen Rotorlagewinkels $\varphi_m$ dar. Am Ende des Einschwingens des Reglers wird $\varphi_{STATOR}$ auf $-\varphi_{FEHL}$ stehen.

$\varphi_{DELTA}$:
In den FIG 5 und 6 ist dies der Ausgang des Reglers. Zusammen mit $\varphi_{LAGE}$ ergibt dies erst den Statorfeldzeigerwinkel. Dieser Wert ist nicht zu verwechseln mit $\Delta\varphi$.

Mit Kenntnis dieser Parameter können nun die Blockschaltbilder der FIG 3 bis 6 näher erläutert werden.

In der Darstellung gemäß FIG 3 ist ein Blockschaltbild einer ersten Reglerstruktur mit einem Lageregler L_PID zur Verschiebung des Statorfeldzeigers gezeigt. Als Eingangswert dient - wie auch bei den folgenden FIG 4 bis 6 - die Differenz aus Lagewinkelsollwert $\varphi_{soll}$ und zurückgeführter im Antrieb mitgeführter Rotorlage $\varphi_{LAGE}$. Am Ausgang des Lagereglers L_PID, bevorzugterweise einem integralen Regler mit proportionalem Anteil, steht die geschätzte Größe $\varphi_{STATOR}$ an, welche den Statorfeldzeiger darstellt, der über einen Umrichterblock UM in die Synchronmaschine eingeprägt wird. Auf den Umrichterblock wirkt zudem $\varphi_{FEHL}$ als Störgröße ein. Am Ausgang steht dann der aktuelle Rotorfeldzeigerwinkel $\varphi_{LAGE}$ an, der auf den Eingang des Lagereglers L_PID rückgekoppelt ist.

In der Darstellung gemäß FIG 4 ist ein Blockschaltbild einer alternativen Reglerstruktur mit kaskadiertem Lage- L_P und Drehzahlregler D_PID zur Verschiebung des Statorfeldzeigers gezeigt. Diese Anordnung unterscheidet sich von der aus FIG 3 dadurch, daß Lageregler L_P und Drehzahlregler D_PID kaskadiert sind. Zwischen beiden wird daher auch ein Drehzahlistwert $n_{ist}$ aus dem Umrichterblock UM auf den Eingang des Drehzahlreglers D_PID rückgeführt.

In der Darstellung gemäß FIG 5 ist ein Blockschaltbild einer weiteren alternativen Reglerstruktur mit Lageregler L_PID zur Verschiebung des Statorfeldzeigers dargestellt, die in wesentlichen Teilen der aus FIG 3 entspricht. Der in den Umrichterblock UM einzuprägende Statorfeldzeiger $\varphi_{STATOR}$ wird dabei jedoch aus der Summe aus dem Ausgangswert $\varphi_{DELTA}$ des Lagereglers L_PID und dem rückgeführten aktuellen Rotorfeldzeigerwinkel $\varphi_{LAGE}$ bestimmt.

In der Darstellung gemäß FIG 6 ist ein Blockschaltbild einer weiteren alternativen Reglerstruktur mit kaskadiertem Lage- L_P und Drehzahlregler D_PID zur Verschiebung des Statorfeldzeigers gezeigt, die eine Kombination der Reglerstrukturen aus FIG 4 und FIG 5 darstellt. Der in den Umrichterblock UM einzuprägende Statorfeldzeiger $\varphi_{STATOR}$ wird ebenfalls aus der Summe aus dem Ausgangswert $\varphi_{DELTA}$ des Drehzahlreglers D_PID und dem rückgeführten aktuellen Rotorfeldzeigerwinkel $\varphi_{LAGE}$ bestimmt. Zwischen Lageregler L_P und Drehzahlregler D_PID wird daher auch ein Drehzahlistwert $n_{ist}$ aus dem Umrichterblock UM auf den Eingang des Drehzahlreglers D_PID rückgeführt

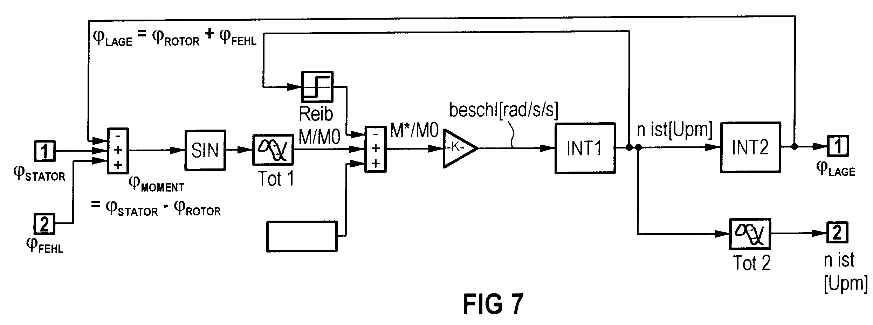

In der Darstellung gemäß FIG 7 ist ein Blockschaltbild einer möglichen Realisierung des Umrichterblocks aus den FIG 3 bis 6 gezeigt, mit dem ein Statorfeldzeiger $\varphi_{STATOR}$ von beliebiger Größe und Winkel in den Stator der Synchronmaschine eingeprägt wird. Als Störgröße geht $\varphi_{FEHL}$ ebenfalls als Eingangsgröße ein. Der ausgangsseitig ermittelte aktuelle Rotorfeldzeigerwinkel $\varphi_{LAGE}$ ist negativ auf den Eingang zurückgekoppelt. Die so gebildete Größe wird über einen Sinusblock SIN und ein erstes Totzeitglied Tot1 in ein normiertes Drehmoment M/M0 umgesetzt. Dieser Wert wird durch ein vorgebbares Gewichtsmoment und eine Reibungskennlinie Reib korrigiert zu einem Drehmoment M*/M0. Der Reibungsparameter wird ermittelt, indem ein Drehzahlistwert $n_{ist}$ mit einer Reibungskennlinie gewichtet und negativ auf den Drehmomentwert M/M0 rückgekoppelt wird. Der so erhaltene Drehmomentwert M*/M0 bewirkt an der Synchronmaschine eine Drehung des Rotors, welche über einen inkrementellen Geber K in Form eines Beschleunigungswertes besch detektiert wird. Mittels eines ersten Integrators INT1 wird daraus der zur Bestimmung des Reibungsparameters zurückzuführende Drehzahlistwert $n_{ist}$ abgeleitet. Dieser Drehzahlistwert wird über ein zweites Totzeitglied Tot2 ebenfalls als Ausgangswert $n_{ist}$ für die Reglerstrukturen der FIG 4 und 6 bereitgestellt. Zusätzlich wird aus dem Ausgangswert des ersten Integrators, dem ohne Totzeit Tot2 behandelten Drehzahlwert $n_{ist}$, über einen zweiten Integrator INT2 ein Lagewert abgeleitet, der aktuelle Rotorfeldzeigerwinkel $\varphi_{LAGE}$.

Aus den oben erläuterten Blockschaltbildern in den FIG 3 bis 6 lassen sich folgende Berechnungsvorschriften ableiten:

$$\varphi_{MOMENT} = \varphi_{STATOR} - \varphi_{ROTOR} \qquad (2)$$

$$\varphi_{LAGE} = \varphi_{ROTOR} + \varphi_{FEHL} \qquad (3)$$

Für die Reglerstrukturen der FIG 5 und 6 gilt:

$$\varphi_{STATOR} = \varphi_{LAGE} + \varphi_{DELTA} \qquad (4)$$

Nach dem Einschwingen des Reglers bewegt sich der aufgeschaltete Statorfeldzeiger und die Achse nicht mehr, es ist ein stabiler Zustand erreicht.

Falls kein Lastmoment auf die Achse wirkt, gilt:

$$\varphi_{MOMENT} = 0 \qquad (5)$$

Bei der Berechnung der Rotorlage müssen nicht hängende und hängende Achsen unterschieden werden:

Aus Gleichungen (2) und (5) ergibt sich für die Reglerstrukturen aus FIG 3 und 4:

$$\varphi_{ROTOR} = \varphi_{STATOR} \cdot \qquad (6)$$

$\varphi_{STATOR}$ entspricht hier dem Ausgang des Reglers. Damit die Fehlorientierung aufgehoben wird, wird der Ausgang des Reglers einfach in die im Rechner mitgeführte Rotorlage ($\varphi_{LAGE}$) geschrieben.

Bei den Reglerstrukturen gemäß FIG 5 und 6 ist der Ausgang des Reglers $\varphi_{DELTA}$. Es gilt mit Gl. (6) und (4):

$$\varphi_{ROTOR} = \varphi_{LAGE} + \varphi_{DELTA} \qquad (7)$$

Damit hier die Fehlorientierung aufgehoben wird, muß also der Ausgang des Reglers auf die im Rechner mitgeführte Rotorlage ($\varphi_{LAGE}$) addiert werden.

Bei hängenden Achsen zieht im allgemeinen ein in der Regel konstantes Lastmoment die Achse stationär soweit aus der Position, bis es durch das Moment $k_t * I_0 * \sin(\varphi_{MOMENT})$ kompensiert wird. ($I_0$ ist der maximale Strom im Stillstand des Motors) Da aber auch nicht die Größe des Lastmoments bekannt ist, läßt sich die tatsächliche Rotorlage so nicht berechnen.

Erst mit mindestens 2 Versuchen mit verschiedenen Strömen läßt sich die Lage des Rotors zurückrechnen. Es gilt allgemein für die Reglerstrukturen gemäß FIG 3 und 4, wobei V das Verhältnis des eingeprägten Stromes aus dem 1. zu 2. Versuch darstellt:

1. Versuch:

$$M_{last} = k_t * I_0 * \sin(\varphi 1_{MOMENT}) \qquad (8)$$
$$= k_t * I_0 * \sin(\varphi 1_{STATOR} - \varphi 1_{LAGE} + \varphi_{FEHL})$$

2. Versuch:

$$M_{last} = V * k_t * I_0 * \sin(\varphi 2_{MOMENT}) = V * k_t * I_0 * \sin(\varphi 2_{STATOR} - \varphi 2_{LAGE} + \varphi_{FEHL}) \qquad (9)$$

Es gilt also

$$V^* \sin(\varphi 2_{STATOR} - \varphi 2_{LAGE} + \varphi_{FEHL}) = \sin(\varphi 1_{STATOR} - \varphi 1_{LAGE} + \varphi_{FEHL}) \tag{10}$$

Dies läßt sich umformen in

$$V * \sin(\varphi 2_{STATOR} - \varphi 2_{LAGE}) * \cos(\varphi_{FEHL}) + V * \cos(\varphi 2_{STATOR} - \varphi 2_{LAGE}) * \sin(\varphi_{FEHL}) \tag{11}$$
$$- \sin(\varphi 1_{STATOR} - \varphi 1_{LAGE}) * \cos(\varphi_{FEHL}) - \cos(\varphi 1_{STATOR} - \varphi 1_{LAGE}) * \sin(\varphi_{FEHL}) = 0$$

oder:

$$\tan(\varphi_{FEHL}) = \sin(\varphi_{FEHL})/\cos(\varphi_{FEHL}) = (V^* \sin(\varphi 2_{STATOR} - \varphi 2_{LAGE}) - \sin(\varphi 1_{STATOR} - \varphi 1_{LAGE})) \tag{12}$$
$$/( - V^* \cos(\varphi 2_{STATOR} - \varphi 2_{LAGE}) + \cos(\varphi 1_{STATOR} - \varphi 1_{LAGE}))$$

Der Hauptwert der Tangensfunktion läuft von -90° bis 90°, so daß beim Finden des richtigen Winkels die Winkel $(\varphi 1_{STATOR} - \varphi 1_{LAGE})$ oder $(\varphi 2_{STATOR} - \varphi 2_{LAGE})$ herangezogen werden müssen. Denn $\varphi_{FEHL}$ muß in unmittelbarer Nachbarschaft von den beiden gefundenen Winkeln liegen, da das Lastmoment die Achse ja nicht beliebig weit herauszieht. Sollte das Lastmoment die Achse weiter als +/-90° herausgezogen haben, dann wurde die Kippgrenze überschritten und die Achse rastet aus.

Daher gilt folgendes:

$$\varphi_{FEHL} = \varphi 2_{STATOR} - \varphi 2_{LAGE} - (((\varphi 2_{STATOR} - \varphi 2_{LAGE} + 90°) \text{ modulo } 180°) - 90°) + \tag{13}$$
$$\arctan((V^* \sin(\varphi 2_{STATOR} - \varphi 2_{LAGE}) - \sin(\varphi 1_{STATOR} - \varphi 1_{LAGE})) / (\cos(\varphi 1_{STATOR} - \varphi 1_{LAGE})$$
$$- V^* \cos(\varphi 2_{STATOR} - \varphi 2_{LAGE})))$$

Für die Reglerstrukturen gemäß FIG 5 und 6 muß statt $(\varphi_{STATOR} - \varphi_{LAGE})$ $\varphi_{DELTA}$ eingesetzt werden:

$$\varphi_{FEHL} = \varphi 2_{DELTA} - (((\varphi 2_{DELTA} + 90°) \text{ modulo } 180°) - 90°) + \arctan((V^* \sin(\varphi 2_{DELTA}) - \sin(\varphi 1_{DELTA})) \tag{14}$$
$$/ (\cos(\varphi 1_{DELTA}) - V^* \cos(\varphi 2_{DELTA})))$$

Für beide Strukturen läßt sich dann die Rotorlage $\varphi_{ROTOR}$ über die Gl. (3) herleiten.

Hier im Beispiel werden nur 2 Versuche angenommen. Dies ist bei Störungen auf den Istwerten oder bei leichten Schwankungen des Lastmoments zuwenig. Vor allem wenn V in der Nähe von 1,0 gewählt wird, dann werden die Rechnungen ungenau. Ein kleineres V liefert zwar genauere Ergebnisse, allerdings steigt die Gefahr, daß der Motor die Last nicht mehr halten kann.

Stabilität der Regelkreise ist eine der wichtigsten Voraussetzungen für Regelverfahren. Da in der Reglerstruktur gemäß FIG 5 das Motorträgheitsmoment und das Lastträgheitsmoment direkt in die Regelkreisverstärkung eingeht, muß untersucht werden, ob sich der Regelkreis bei einer wachsenden Kreisverstärkung noch stabil verhält.

Nach der Linearisierung des Sinusfunktion im Arbeitspunkt und der Annäherung der Totzeiten durch ein PT1-Glied ergibt sich, daß der Regelkreis ab einer gewissen Verstärkung instabil wird. Daher darf die Verstärkung nicht zu groß gewählt werden. Eine Last wird immer nur als Erhöhung des Gesamtträgheitsmomentes aufgefaßt.

Bei der Auslegung der Reglerparameter nach üblichen Verfahren (z.B. das nach den Doppelverhältnissen) wird das bekannte Motorträgheitsmoment verwendet, die Lastträgheit wird als 0 angenommen. Damit ist die maximale Kreisverstärkung definiert: Ohne Lastträgheit ist der Regelkreis stabil ausgelegt und mit Last verhält er sich zwar träger, aber - obige Vereinfachungen unterstellt - bleibt immer stabil, da die Kreisverstärkung mit wachsender Last immer kleiner wird.

Unter Berücksichtigung der Sinusfunktion SIN im Umrichterblock UM aber muß festgestellt werden, daß der Stellbereich sehr eingeschränkt ist, da die Stellgröße nicht beliebig anwachsen kann, womit die Kreisverstärkung weiter zurückgeht, ja sogar negativ werden kann, was zu einer Mitkopplung führt und damit zum sogenannten „Ausrasten". Dort wird der Motor durch ein Moment ausgelenkt. Zwar wird er wieder abgebremst, aber die Stellgröße kommt in einen Bereich hinein, wo die Regelkreisverstärkung wieder zurückgeht, wodurch der Motor noch weiter beschleunigt:

Dieses „Ausrasten" ist insbesondere dann der Fall, wenn die Regelkreisverstärkung aufgrund eines hohen, unbekannten Lastträgheitsmomentes sehr klein ist, und die Stellgröße immer langsamer wird und immer größere Amplituden bekommt, wodurch sie leicht über die Kippgrenze ($\sin\varphi_{MOMENT} = +/- 1$) hinausläuft. Gerade auch bei hängenden Achsen, bei denen der Ausgang des Reglers durch eine permanent hängende Last, die elektrisch kompensiert werden muß, noch weniger Stellbereich zur Verfügung hat, kommt dieses „Ausrasten" vor.

Um dieses Problem zu lösen werden zwei Verfahren, wobei hängende und nicht hängende Achsen unterschieden werden:

Ein hohes Gesamtträgheitsmoment (aber auch eine geklemmte Achse) zeigt sich dadurch, daß sich bei einem bestimmten Strom die Lage erheblich langsamer (oder gar nicht) verändert als bei einem kleinen Gesamtträgheitsmoment. Daher ist es das Ziel des Verfahrens, ein hohes Gesamtträgheitsmoment zu identifizieren und dann die Regelkreisverstärkung so anzuziehen, daß das „Ausrasten" gar nicht erst passiert.

Strom schrittweise erhöhen:

Bei nicht hängenden Achsen ist es das Ziel, möglichst wenig Verfahrbewegungen zu erlauben. Die Größe der Auslenkung durch einen Fehlwinkel ist proportional zur Höhe des Stroms (Strom ist proportional der Länge des Statorfeldzeigers). Daher ist es hier zweckmäßig, den Regler erst mit einem kleinen Strom, d.h. mit einem kleinen Moment, zu starten. Nach dem Einschwingen des Reglers wird der Strom sukzessive erhöht, um den Effekt der Haftreibung relativ zu verkleinern.

Bei kleinem Strom (Moment) muß sich der Statorfeldzeiger (=Stellgröße) relativ weit bewegen, bevor ein Moment aufgebaut wird, das das Haftmoment überwinden kann. Bei großem Strom dagegen führt bereits eine kleinere Bewegung des Statorfeldzeigers zu einem Moment, das die Haftreibung überwindet. Der Effekt der Haftreibung nimmt mit zunehmenden Strom also ab. Dies bedeutet, daß die Genauigkeit des Verfahrens mit der Höhe des Stromes steigt.

Statorfeldzeiger bei 0° und bei 90°:

Es reicht aber nicht, einfach mit einem kleinen Strom anzufangen und dann zu warten, bis sich Bewegungen einstellen, um die Verfahrbewegungen zu begrenzen. Denn es ist ja der Fall möglich, daß zwischen Statorfeldzeiger und Rotorfeld knapp 180 Grad elektrisch liegen, so daß zuerst gar kein Moment aufgebracht wird und der Strom weiter erhöht wird, bis bei einem hohen Strom eine sehr große Verfahrbewegung ausgelöst wird. Um dies zu verhindern, wird vor jeder Erhöhung des Stromes der Statorfeldzeiger um 90 Grad elektrisch verschoben. Erst wenn dort ebenfalls keine Bewegung aufgetreten ist, wird der Statorfeldzeiger auf die Ursprungsposition zurückgelegt und der Strom erhöht. Auf diese Art und Weise erhält man immer mindestens 70% (=sin(45°)) des Momentes bei gegebenem Strom.

Abbau von Drehzahlen vor Veränderung des Statorfeldzeigers: Wenn ein Strom nach obigem Verfahren eingebracht wird, dann bewegt sich immer etwas, auch wenn die Bewegung sehr klein ist und kaum detektiert werden kann. Damit die dann entstandene kleine Drehzahl wieder abgebaut wird, muß, bevor der Statorfeldzeiger in Länge oder im Winkel verändert wird, der negative Strom die gleiche Zeit eingeprägt werden. Durch die Beschleunigung und die anschließende negative Beschleunigung mit jeweils der gleichen Zeit ist die Drehzahl am Ende des Vorgangs wieder auf 0 abgebaut. Der dabei kleine, zurückgelegte Weg wird so berücksichtigt, daß der neue Lageistwert der neue Lagesollwert ist.

Das Einprägen eines negativen, um 180 Grad phasenverschobenen Stromes kann auch so gehandhabt werden, daß er nur dann eingeprägt wird, wenn die kleinen Ströme zur Erzeugung einer Drehung zwar eine Bewegung hervorrufen könnten, die Ströme aus den im vorangehenden genannten Gründen jedoch so klein gewählt wurden, daß diese Drehung nicht eindeutig aus dem Meßrauschen hervortritt (Schwelle nicht überschritten). Dies kann bei mehrfacher Fehlerkennung einer Drehung zu einer größeren Geschwindigkeit der Rotorachse führen. Der negative, um 180 Grad phasenverschobenen Strom kann dann alternativ nur in einem solchen Fall einsetzen, wenn keine Bewegung erkannt wurde.

Gesamtträgheitsmoment bestimmen:

Aus den Stabilitätsüberlegungen ergibt sich, daß die Regelkreisverstärkung nie höher werden sollte, wie der Regler mit Lastträgheitsmoment 0 ausgelegt wurde. Deshalb darf die Regelkreisverstärkung nur angezogen werden, wenn es sicher ist, daß sie nicht die maximale Kreisverstärkung übersteigt. Dazu wurden Kriterien gefunden, die eine Mindestgröße eines Gesamtträgheitsmoments zuverlässig anzeigen.

Da das Anfangsmoment mindestens 70% des Maximalmoments beträgt, wird die Achse im ersten Augenblick auf jeden Fall beschleunigt. Diese Beschleunigung hängt direkt vom Gesamtträgheitsmoment ab. Die Beschleunigung ist auch proportional zum zurückgelegten Weg nach einer Zeit $t_0$.

Dieser Zusammenhang kann genutzt werden, um zu entscheiden, ob das Gesamtträgheitsmoment sicher größer als z.B. $x_Q * Q_{MOTOR}$ ist oder nicht, wobei $x_O$ ein beliebiger Faktor > 1 ist. Dann nämlich darf auch die Kreisverstärkung um diesen Faktor angehoben werden.

Zur Berechnung der Schwelle gilt folgendes:

Innerhalb der Zeit $t_0$ wird folgender Weg zurückgelegt:

$$\text{Weg} = 0{,}5 * \text{Beschleunigung} * (t_0 - 2*T_{IREG})^2 \qquad (15)$$

Hierbei werden die Einschwingvorgänge des Stromreglers so berücksichtigt, daß der Strom nach 2 Stromreglertakten ($T_{IREG}$) den Sollwert erreicht. Bei einem Anfangsstrom von 8% $I_0$ ergibt sich die Beschleunigung zu:

$$\text{Beschleunigung} = ( 8\% * k_t * I_0 ) / (x_Q * Q_{MQTQR}) \qquad (16)$$

Dies gilt aber nur für einen feststehenden Statorfeldzeiger mit perfekter Orientierung auf die Läuferlage.

Dadurch daß die Regelung aktiv ist und der Zeiger ja noch wandern kann, wird die Beschleunigung eher kleiner. Nach Versuchen ergab sich, daß der Zeiger innerhalb von $t_0 = 1$ ms kaum gedreht wird, so daß ein Faktor von 0,7 eine große Reserve darstellt.

Durch die 90°-weise Abtastung wird immer mindestens ein Faktor von 0,7 vom maximalen Moment erreicht. Es ergibt sich der minimale Weg zu:

$$Weg = (0,7)^2 * 0,5 * ( 8\% * k_t * I_0 ) / (x_Q * Q_{MQTQR} ) * (t_0 - 2*T_{IREG})^2 \tag{17}$$

Mit einem weiteren Sicherheitsfaktor von 0,7 (Störungen auf dem Istwert o.ä.) wird die Minimalschwelle zu:

$$Schwelle = (0,7)^3 * 0,5 * ( 8\% * k_t * I_0 ) / (x_Q * Q_{MQTQR} ) * (t_0 - 2*T_{IREG})^2 \tag{18}$$

Wenn diese Schwelle nicht erreicht wird, dann ist das Gesamtträgheitsmoment sicher höher als $(x_Q * Q_{MQTQR})$. Also darf die Kreisverstärkung gefahrlos um den Faktor $x_Q$ erhöht werden.

Wird jetzt der Strom um den Faktor $x_I$ erhöht, dann erhöht sich die Beschleunigung ebenfalls um diesen Faktor. Wird die Schwelle auch hier nicht erreicht, dann ist das Gesamtträgheitsmoment auch hier höher als $(x_I Q_{MQTQR})$.

Wird jetzt nicht mehr 1 ms sondern die doppelte Zeit gewartet und die Schwelle nicht erreicht, dann ist das Gesamtträgheitsmoment höher als $4 Q_{MQTQR}$.

Dies läßt sich beliebig kaskadieren, solange sich die Achse nicht bewegt, und so läßt es sich durch immer neue Versuche dem tatsächlichen Trägheitsmoment annähern.

Bei hängenden Achsen läßt sich aufgrund der Bewegung der Achse auch im stromlosen Zustand der Motoren das Gesamtträgheitsmoment nur schlecht mit einer Schwelle schätzen. Das liegt daran, daß die Achse sich nicht allein aufgrund des eingeprägten Stromes und des Gesamtträgheitsmomentes bewegt, sondern das Lastmoment verursacht an sich schon eine Bewegung. Trotzdem lassen sich damit immer noch größere Gesamtträgheitsmomente erkennen.

Als Schwierigkeit kommt noch die Tatsache hinzu, daß ein kleiner Anfangsstrom auch bei maximaler Momentenausbeute ($\varphi_{MQMENT} = +/- 90°$) möglicherweise gar nicht die Achse halten kann. Daher kann hier auf eine möglichst kleine Auslenkung der Achse nicht mehr geachtet werden, sondern es muß sicher sein, daß die Achse nicht ausbricht. Daher muß der Strom von Anfang an 100% von $I_0$ betragen.

Nach dem Verfahren, den Statorfeldzeiger zu verändern, ergibt sich eine Schwelle, die niemals unterschritten werden kann. Es läßt sich nachweisen, daß diese Schwelle bei verschiedenen Lastmomenten

$$Minimaler\ Weg = Schwellenfaktor * M_0 / (x_Q * Q_{MQTQR} ) * t_0^2 \tag{19}$$

ist. Der Schwellenfaktor hängt von der Größe des Lastmoments ab. Daraus läßt sich ableiten, daß, wenn der Wert des Lastmomentes im voraus bekannt wäre, sich der Schwellenfaktor noch höher einstellen ließe, womit sich das Gesamtträgheitsmoment sich deutlich besser schätzen ließe.

| $|M_L|$ | Schwellenfaktor |
|---|---|
| egal | 0,08 |
| > 20 % $M_0$ | 0,1 |
| > 27 % $M_0$ | 0,2 |
| > 35 % $M_0$ | 0,3 |

Aufgrund des sich bewegenden Statorfeldzeigers soll ein Faktor von 0,7, für mögliche Störungen auf den Istwerten ebenfalls ein Sicherheitsfaktor von 0,7 angenommen werden (die 2 Stromreglertakte, die in Gl. (18) von $t_0$ abgezogen werden, sind hier eigentlich 2/3 Takte, da von vornherein von $3 * t_0$ ausgegangen wird, womit diese Takte ebenfalls eine Reserve darstellen, da sie die Schwelle noch kleiner machen):

$$Schwelle = (0,7)^2 * ( 8\% * M_0 ) / (x_Q * Q_{MQTQR} ) * (t_0 - 2*T_{IREG})^2 \tag{20}$$

Im Vergleich mit der Schwelle aus Gl. (18) fällt auf, daß diese hier um den Faktor 2/0,7 größer ist. Daher kann bei Verwendung der Schwelle aus Gl. (18) nach dem im vorangehenden geschilderten Verfahren die Kreisverstärkung um $(2 / 0,7 * x_Q)$ angehoben werden, ohne daß der Regler instabil würde.

Dieses eingeschränkte Verfahren wird es nicht ausschließen können, daß die Achse nicht doch einmal „ausrastet", weshalb zur sinnvollen Identifikation der Rotorlage eine Möglichkeit geschaffen werden soll, die es ermöglicht, eine „ausgerastete" Achse wieder einzufangen.

Konnte das Gesamtträgheitsmoment nicht erkannt werden oder nicht genau genug, und die Achse ist „ausgerastet", dann muß die Achse wieder abgebremst werden. Das Abbremsen geschieht durch Auftrennen des Regelkreises und durch Vorgabe eines bremsenden Statorfeldzeigers, der aus einem zweiten, ungenaueren Rotorlageidentifikationsverfahren gewonnen wurde. Steht die Achse erst einmal, dann wird die Regelkreisverstärkung angezogen und die aktuelle Stillstandsposition als neuen Lagesollwert genommen.

Dieses Verfahren kommt in der Hauptsache bei hängenden Achsen zum Tragen, wenn das Gesamtträgheitsmoment nicht so einfach erkannt werden kann, da sich die Achse auch ohne Strom schon über eine Schwelle bewegt.

Als Ausrastkriterium gilt folgender Sachverhalt: Die Achse ist „ausgerastet", wenn der Statorfeldzeiger mindestens 360° überstrichen hat.

Zweites Verfahren zur Rotorlageidentifikation:

Wenn die Achse „ausrastet", wird der Statorfeldzeiger erst einmal 360° überstreichen und (mit ca. 2 Stromreglertakten Verzögerung) Beschleunigungen bewirkt haben, die auch meßbar sind. Wird die Statorfeldzeigerposition über diesen Beschleunigungswerten aufgetragen, dann bildet dies gerade eine Sinuskurve ab, wobei die Amplitude dem Motormoment, der Offset dem Lastmoment und die Phasenverschiebung zwischen dem Statorfeldwinkel 0 und dem positiven Nulldurchgang der Kurve dem gesuchten Fehlwinkel entsprechen.

Mit einem Regressionsverfahren, z.B. das der kleinsten Quadrate, das einen Sinus in die Meßwerte hineinlegt, lassen sich diese Werte berechnen, bzw. der Statorfeldzeiger bei der Maximal- und Minimalbeschleunigung und bei der Beschleunigung gleich 0. Damit läßt sich eine „ausgerastete" Achse abbremsen, bei Stillstand mit dem Statorfeldzeiger für die Nullbeschleunigung vorbesetzen und anschließend das geregelte Identifikationsverfahren gemäß der vorliegenden Erfindung wieder mit höherer Kreisverstärkung einschalten.

Da die Beschleunigungswerte besonders anfällig für Störungen sind (Beschleunigung ist die zweite Ableitung der Lage!), ist ein Regressionsverfahren besonders gut geeignet, die Störungen herauszufiltern.

Randbedingungen:

Um geeignete Ergebnisse zu erhalten sind, eine gewisse Anzahl von Messungen nötig. Wenn nämlich der Statorfeldzeiger zu schnell den Bereich von 360° elektrisch überstreicht, kann es sein, daß noch kein gültiges Ergebnis zur Verfügung steht. Daher gibt es auch eine Mindestanzahl von Meßwerten, bevor das Verfahren nicht bremsen darf.

Falls nach z.B. 10 Stromreglertakten die Geschwindigkeit der Achse immer noch nicht kleiner geworden ist, werden die Bremsen geschlossen, um die Achse dadurch stillzusetzen.

Bei festgebremsten Achsen funktioniert das Verfahren nicht. Wurden sie gar nicht geöffnet oder befindet sich eine zu identifizierende Achse an einem Anschlag, dann werden auch beim höchsten Strom keine Bewegungen erkannt, was dann gemeldet werden wird.

Die Bremsen müssen (insbesondere bei hängenden Achsen) kurz nach dem Einschalten des Identifikationsreglers gemäß FIG 3 bis 6 geöffnet werden. Dies ist ein entscheidender Grund, daß als Identifikationsregler ein Lageregler eingesetzt wird. Bei einem Drehzahlregler könnte der integrale Anteil vollaufen, der dann einen größeren Ruck der Achse zur Folge hätte.

Solange die Bremsen noch geschlossen sind, darf bei nicht hängenden Achsen der Strom nicht weiter erhöht werden, da dies dann beim plötzlichen Öffnen der Bremsen eine große Achsbewegung zur Folge haben könnte.

Der Antrieb gibt ein Signal „Bremse öffnen" an eine Steuerung weiter, beispielsweise an eine numerische Steuerung einer Werkzeugmaschine, eines Roboters oder dergleichen. Wenn die Bremse geöffnet wird, dann erhält der Antrieb die Meldung „Bremse offen".

Wenn der Antrieb nicht die Bremsen wieder schließen lassen will, nimmt er das Signal „Bremse öffnen" wieder weg.

Solange die Rotorlageidentifikation gemäß der vorliegenden Erfindung nicht abgeschlossen ist, kann die numerische Steuerung ihren Lageregler nicht einschalten und muß die Lageüberwachungen ausblenden.

Die numerische Steuerung muß die Reglerfreigaben geben können, obwohl der Antrieb noch gar nicht hochgefahren ist. Der Antrieb quittiert das Ende der Identifikation.

Zusammenfassend werden durch den Einsatz des erfindungsgemäßen Verfahrens zur Rotorlageidentifikation folgende weitere Vorteile erreicht:

Bei nicht hängenden Achsen kann die Stabilität des Reglers bei allen nur erdenklichen Gesamtträgheits- und Fehlwinkelkombinationen nachgewiesen werden. Der Regler hat sich in der Mehrheit aller Fälle innerhalb einer halben Sekunde eingeschwungen und die Auslenkung des Rotors bleibt in der Regel innerhalb eines elektrischen Grads.

Bei hängenden Achsen ist das Verfahren trotz der erwarteten Einschränkungen immer noch gut genug. Mit Hilfe eines Verfahrensmix war eine 100%-Stabilität bei allen versuchten Gesamtträgheits-/Fehlwinkel-Kombinationen der Rotorlageidentifikation zu beobachten.

Bei relativ kleinen Gesamtträgheitsmomenten bezogen auf das Motorträgheitsmoment werden bezüglich der Schnelligkeit des Reglers und der Auslenkung ähnlich gute Ergebnisse wie bei den nicht hängenden Achsen erzielt.

**Patentansprüche**

1. Verfahren zur Bestimmung der absoluten Rotorlage bei feldorientiert geregelten Synchronmaschinen, welches die folgenden Verfahrensschritte aufweist:

1.1 es wird ein Schätzwert ($\varphi_r$) des tatsächlichen Rotorlagewinkels ($\varphi_m$) vorgegeben,

1.2 es wird eine aus momentbildender ($I_q$) und flußbildender Komponente ($I_d$) bestehende Größe in Richtung des geschätzten Rotorlagewinkels ($\varphi_r$) eingeprägt, indem die momentbildende Komponente ($I_q$) zu Null und die flußbildende Komponente ($I_d$) zu einem Wert größer als Null gewählt wird, so daß im Falle einer Abweichung des Schätzwertes ($\varphi_r$) des Rotorlagewinkels vom tatsächlichen Rotorlagewinkel ($\varphi_m$) ein Drehmoment (M) erzeugt wird, welches eine Bewegung des Rotors (R) in Richtung auf die geschätzte Rotorlage ($\varphi_r$) hervorruft,

1.3 es wird ein durch die Bewegung des Rotors (R) bedingter Drehzahlistwert ($n_{ist}$) bestimmt und ausgewertet,

1.4 in Abhängigkeit vom Drehzahlistwert ($n_{ist}$) wird ein Regelungswert bestimmt, der einen Korrekturwinkel ($\Delta\varphi$) vorgibt, welcher den geschätzten Rotorlagewinkel ($\varphi_r$) auf den tatsächlichen Rotorlagewinkel ($\varphi_m$) korrigiert.

**2.** Verfahren zur Bestimmung der absoluten Rotorlage bei feldorientiert geregelten Synchronmaschinen, auf deren Achse stationär ein konstantes, nicht bekanntes Lastmoment einwirkt, mit folgenden Verfahrensschritten:

2.1 es wird ein Schätzwert ($\varphi_r$) des tatsächlichen Rotorlagewinkels ($\varphi_m$) vorgegeben,

2.2 es werden mindestens zwei aus momentbildender ($I_q$) und flußbildender Komponente ($I_d$) bestehende Größen in Richtung des geschätzten Rotorlagewinkels ($\varphi_r$) mit unterschiedlichen Beträgen eingeprägt, wobei die momentbildende Komponente ($I_q$) jeweils zu Null und die flußbildende Komponente ($I_d$) jeweils zu einem unterschiedlichen Wert größer als Null gewählt wird, so daß im Falle einer Abweichung des Schätzwertes ($\varphi_r$) des Rotorlagewinkels vom tatsächlichen Rotorlagewinkel ($\varphi_m$) jeweils ein Drehmoment (M) erzeugt wird, welches eine Bewegung des Rotors (R) in Richtung auf die geschätzte Rotorlage ($\varphi_r$) hervorruft,

2.3 es wird ein durch die jeweilige Bewegung des Rotors (R) bedingter Drehzahlistwert ($n_{ist}$) bestimmt und ausgewertet,

2.4 in Abhängigkeit der Drehzahlistwerte ($n_{ist}$) wird ein Regelungswert bestimmt, der einen Korrekturwinkel ($\Delta\varphi$) vorgibt, welcher den geschätzten Rotorlagewinkel ($\varphi_r$) auf den tatsächlichen Rotorlagewinkel ($\varphi_m$) korrigiert.

**3.** Verfahren nach Anspruch 1 oder 2, mit folgendem weiteren Verfahrensschritt:

3.1 der Korrekturwinkel ($\Delta\varphi$) wird durch eine Lageregelung (L_PID) oder eine kaskadierte Lage- (L_P) und Drehzahlregelung (D_PID) mit integralem Anteil und bedarfsweise einem zusätzlichen proportionalen Anteil bestimmt.

**4.** Verfahren nach einem der vorangehenden Ansprüche, mit folgendem weiteren Verfahrensschritt:

4.1 der Schätzwert ($\varphi_r$) des tatsächlichen Rotorlagewinkels ($\varphi_m$) wird zu Null gesetzt.

**5.** Verfahren nach einem der vorangehenden Ansprüche, mit folgendem weiteren Verfahrensschritt:

5.1 der Drehzahlistwert ($n_{ist}$) wird mittels einer inkrementellen Drehzahlerfassung bestimmt.

**6.** Verfahren nach einem der vorangehenden Ansprüche, mit folgendem weiteren Verfahrensschritt:

6.1 als momentbildende Komponente ($I_q$) wird ein Querstrom in Wirkungsrichtung senkrecht zum geschätzten Rotorlagewinkel ($\varphi_r$) und als flußbildende Komponente ($I_d$) ein Längsstrom in Richtung des geschätzten Rotorlagewinkels ($\varphi_r$) verwendet.

**7.** Verfahren nach einem der vorangehenden Ansprüche, mit folgendem weiteren Verfahrensschritt:

7.1 der Längsstrom als flußbildende Komponente ($I_d$) wird so groß gewählt, daß die Haftreibung des Rotors (R) überwunden wird, in diesem Bereich jedoch so, daß eine möglichst

geringe Drehung des Rotors (R) erfolgt.

**8.** Verfahren nach einem der vorangehenden Ansprüche, mit folgendem weiteren Verfahrensschritt:

8.1 die Regelung wird mit einem kleinen Drehmoment, insbesondere hervorgerufen durch einen kleinen Strom, gestartet, welches nach dem Einschwingvorgang sukzessive erhöht wird.

9. Verfahren nach einem der vorangehenden Ansprüche, mit folgendem weiteren Verfahrensschritt:

9.1 die bei der Ermittlung des Drehzahlistwertes ($n_{ist}$) entstandene Drehzahl wird wieder abgebaut, indem für die gleiche Zeit ein entsprechendes negatives Moment erzeugt wird, wozu die in Richtung des geschätzten Rotorlagewinkels ($\varphi_r$) eingeprägte Größe mit der momentbildenden Komponente ($I_q$) zu Null und einem im Vergleich zu vorher negativen Wert für die flußbildende Komponente ($I_d$) gewählt wird, bevor der geschätzte Rotorlagewinkel ($\varphi_r$) auf den tatsächlichen Rotorlagewinkel ($\varphi_m$) korrigiert wird.

10. Verfahren nach einem der vorangehenden Ansprüche, mit folgendem weiteren Verfahrensschritt:

10.1 der geschätzte Rotorlagewinkel ($\varphi_r$) wird um einen vorgebbaren Winkelwert verschoben, wenn sich nach einer vorgebbaren Zeit keine Drehung des Rotors (R) eingestellt hat.

11. Regelungsstruktur zur Bestimmung der absoluten Rotorlage bei feldorientiert geregelten Synchronmaschinen, welche die folgenden Elemente aufweist:

11.1 es ist ein PI-Regler (PI) vorgesehen, dem ein zu Null gesetzter Drehzahlsollwert (0) bzw. Lagewinkelsollwert als Führungsgröße dient,
11.2 es ist ein Mittel zur Erzeugung eines Drehmomentes (M) vorgesehen, dem der Ausgangswert ($\Delta\varphi$) des PI-Reglers (PI) als Eingangssignal dient,
11.3 es ist eine Übertragungskennlinie (T) vorgesehen, die das Trägheitsmoment ($\Theta$) des Rotors berücksichtigt,
11.4 ein durch diese Elemente herbeigeführter Drehzahlistwert ($n_{ist}$) bzw. ein daraus abgeleiteter Lageistwert des Rotors (R) ist als Regelgröße auf den Eingang des PI-Reglers (PI) zurückgeführt.

12. Regelungsstruktur, insbesondere nach Anspruch 11, zur Bestimmung der absoluten Rotorlage bei feldorientiert geregelten Synchronmaschinen, welche die folgenden Elemente aufweist:

12.1 es ist ein Lageregler (L_PID) oder ein kaskadierter Lage- (L_P) und Drehzahlregler (D_PID) vorgesehen,
12.2 es ist ein Umrichter (UM) zur Erzeugung eines Drehmomentes (M) vorgesehen, welcher das Einprägen eines Statorfeldzeigers ($\varphi_{STATOR}$) von beliebiger Größe und Winkel in den Stator der Synchronmaschine ermöglicht,
12.3 es ist ein inkrementeller Drehgeber an der Synchronmaschine vorgesehen,
12.4 ein aus einem durch diese Elemente herbeigeführten Drehzahlistwert ($n_{ist}$) abgeleiteter Lagewinkelistwert des Rotors (R) ist als Regelgröße auf den Eingang des Lagereglers (PI) zurückgeführt; bei Vorhandensein des kaskadierten Drehzahlreglers ist zusätzlich der Drehzahlistwert ($n_{ist}$) als weitere Regelgröße auf dessen Eingang zurückgeführt,
12.5 es sind Mittel zur Übernahme des Anfangslagewinkels in den Sollwert des Lagereglers (PI) vorgesehen.

13. Reglerstruktur, insbesondere nach Anspruch 11, zur Bestimmung der absoluten Rotorlage bei feldorientiert geregelten Synchronmaschinen, auf deren Achse stationär ein konstantes, nicht bekanntes Lastmoment einwirkt, mit folgenden Elementen:

13.1 es ist ein Lageregler (PI) oder ein kaskadierter Lage- und Drehzahlregler (P, PID) vorgesehen,
13.2 es ist ein Umrichter zur Erzeugung eines Drehmomentes (M) vorgesehen, welcher das Einprägen eines Statorfeldzeigers ($\varphi_{STATOR}$) von beliebiger Größe und Winkel in den Stator der Synchronmaschine ermöglicht,
13.3 es ist ein inkrementeller Drehgeber an der Synchronmaschine vorgesehen,
13.4 ein aus einem durch diese Elemente herbeigeführten Drehzahlistwert ($n_{ist}$) abgeleiteter Lagewinkelistwert des Rotors (R) ist als Regelgröße auf den Eingang des Lagereglers (PI) zurückgeführt; bei Vorhandensein des kaskadierten Drehzahlreglers ist zusätzlich der Drehzahlistwert ($n_{ist}$) als weitere Regelgröße auf dessen Eingang zurückgeführt,
13.5 es sind Mittel zur Übernahme des Anfangslagewinkels in den Sollwert des Lagereglers (PI) vorgesehen,
13.6 es sind Mittel zur Bestimmung eines Korrekturwinkels ($\Delta\varphi, \varphi_{FEHL}$) anhand mindestens zweier eingeprägter Statorfeldzeiger ($\varphi1_{STATOR}, \varphi2_{STATOR}$) unterschiedlicher Größe vorgesehen.

FIG 1

FIG 2

FIG 3

FIG 4

FIG 5

FIG 6

FIG 7